**Europäisches Patentamt**

(19) **European Patent Office**

**Office européen des brevets**

(11) Veröffentlichungsnummer: **0 254 027**
**B1**

(12) **EUROPÄISCHE PATENTSCHRIFT**

(45) Veröffentlichungstag der Patentschrift:
29.08.90

(51) Int. Cl.⁵: **A61C 13/265, A61C 13/225**

(21) Anmeldenummer: **87108654.2**

(22) Anmeldetag: **16.06.87**

(54) Zahprothesengeschiebe.

(30) Priorität: **20.06.86 DE 8616486 U**

(43) Veröffentlichungstag der Anmeldung:
**27.01.88 Patentblatt 88/4**

(45) Bekanntmachung des Hinweises auf die Patenterteilung:
**29.08.90 Patentblatt 90/35**

(84) Benannte Vertragsstaaten:
**AT BE CH DE ES FR GB GR IT LI NL SE**

(56) Entgegenhaltungen:
**DE-A- 1 566 198**
**DE-A- 1 960 227**
**DE-A- 2 427 888**
**DE-A- 2 443 584**
**US-A- 3 089 242**

(73) Patentinhaber: **Nova-Pro Attachment GmbH,**
**Lindenstrasse 18, D-5882 Meinerzhagen(DE)**

(72) Erfinder: **Speckmann, Frank, Karl-Halle-Strasse 101,**
**D-5800 Hagen(DE)**

(74) Vertreter: **Hassler, Werner, Dr.,**
**Postfach 17 04 Asenberg 62, D-5880 Lüdenscheid(DE)**

## Beschreibung

Die Erfindung betrifft ein Zahnprothesengeschiebe mit einer Führungsmatrize und einer in dieselbe einschiebbaren Patrize.

Ein Zahnprothesengeschiebe nach der US-A 3 089 242 ist als T-Geschiebe bekannt. Die Patrize mit T-förmigem Querschnitt hat eine klemmende und gegebenenfalls auch rastende Nase an einer Paßfläche. Zwar ist eine Einstellung und Nachstellung der Nase möglich, jedoch besteht die Gefahr, daß diese Nase beschädigt wird oder abbricht.

Dann muß die gesamte Patrize an dem Gerüst der Zahnprothese bzw. an der Zahnprothesenplatte ausgetauscht werden. Dieses ist außerordentlich aufwendig und für den Prothesenträger kostspielig. Außerdem weisen solche Zahnprothesengeschiebe Verkantungsprobleme auf, indem beim Einsetzen der Zahnprothese unvermeidbare Verkantungen ein Verspannen und Festfressen der Metallteile bewirken, so daß dadurch die Zahnprothese beschädigt werden kann.

Aufgabe der Erfindung ist die Bereitstellung eines Zahnprothesengeschiebes, das keine Verkantungsprobleme aufweist und dessen Patrizenhauptteil mühelos austauschbar ist.

Diese Aufgabe wird nach der Erfindung dadurch gelöst, daß das Patrizenhauptteil aus einem rückstellfähigen, zähen, abriebbeständigen Kunststoff besteht und austauschbar in einer in Einschubrichtung der Patrize ausgerichteten Schwalbenschwanzführung der Patrize aufgenommen ist und daß eine in einen Gewindedurchgang des Patrizenhauptteils eingreifende Stiftschraube in ein Loch in der Wand der Schwalbenschwanzführung hineinreicht.

Die Erfindung unterscheidet sich insofern vom Stand der Technik, als das Patrizenhauptteil aus einem Kunststoff der angegebenen Art besteht. Dadurch werden die Reibverhältnisse in den Geschiebeführungen aus Gußmetall verbessert. Da das Kunststoffteil infolge der Nachgiebigkeit des Kunststoffes nicht klemmt, ist ein Festfressen ausgeschlossen. Infolgedessen führen Verkantungen nicht mehr zu Beschädigungen oder Fehlfunktionen. Das Patrizenhauptteil stellt sich jedoch auch nach einer Verformung wieder in seine Ausgangsform zurück. Das Patrizenhauptteil ist jederzeit austauschbar und auch nachstellbar. Ein Kunststoff der genannten Art ist vorzugsweise ein verstärkter Thermoplast. Ein Füllstoff, der die Festigkeit verstärkt ist geeignet. Bevorzugt ist ein faserverstärkter Kunststoff, insbesondere ein Kunststoff auf Polyamidbasis. Ein solcher Kunststoff ist mit hoher Genauigkeit und Formhaltigkeit durch Spritzgießen formbar. Diese Herstellung ist sehr kostengünstig. Die Stiftschraube sichert und fixiert die Patrizenteile gegen Verschiebungen innerhalb der Schwalbenschwanzführung.

In Weiterbildung der Erfindung ist vorgesehen, daß mindestens an einer Geschiebepaßfläche des Patrizenhauptteils eine Friktionsplatte lösbar und einstellbar hinsichtlich der Reibungskraft gegenüber der Matrize angeordnet ist. Dadurch ist jederzeit eine nachstellbare Einstellung der Passung und der Friktionskraft möglich und auch die Friktionsteile sind leicht austauschbar.

Dadurch ergibt sich eine besonders günstige Einstellbarkeit der Friktionskraft. Damit ist eine schnelle und genaue Einstellung der Passung und der Friktionskraft des Geschiebes möglich. Die Friktionsplatte läßt sich jederzeit austauschen und erneuern, ohne daß an der Zahnprothese umfangreiche Arbeiten durchgeführt werden müssen. Die Friktionsplatte läßt sich nach Lösen der Schrauben in einfacher Weise abnehmen und durch eine neue Friktionsplatte ersetzen.

Die Führungsmatrize des Geschiebes kann auch auf der Unterseite abgeschlossen sein, so daß die Unterseite der Führungsmatrize entsprechend dem Kiefer und dem Zahnfleischprofil modelliert werden kann. Dadurch erhält man eine geschlossene Auflage auf dem Zahnfleisch, so daß Vakatwucherungen kaum möglich sind.

Eine sichere Führung des Patrizenhauptteils erzielt man dadurch, daß in eine Schwalbenschwanznut des Patrizenhauptteils ein Schwalbenschwanzansatz am Vorderende der Friktionsplatte einschiebbar ist.

Die Abmessungen der Paßfläche des Patrizenhauptteils werden dadurch von der Friktionsplatte nicht beeinflußt, daß die Friktionsplatte in einer Ausnehmung der Paßfläche des Patrizenhauptteils liegt.

Die Sicherung der Patrizenteile gegen Verschiebungen innerhalb der Schwalbenschwanzführung erfolgt dadurch, daß ein durch einen Gewindedurchgang in der Friktionsplatte reichender Gewindestift in ein konisches Sackloch im Kopf der Stiftschraube eingreift.

Eine großflächige Friktion wird dadurch erzielt, daß die Friktionsplatte im Bereich des Hinterendes eine konvexe Biegung aufweist. Hierdurch wird die Abnutzung der Friktionsplatte weitgehend herabgesetzt, so daß die Friktionsplatte lange Zeit benutzt und öfter nachgestellt werden kann, bevor ein Austausch erforderlich ist.

Eine besonders genaue und sorgfältige Einbettung der Führungen in das Prothesengerüst und eine Krone erhält man dadurch, daß die Gußmodelle der Führungsmatrize und der Schwalbenschwanzführung der Patrize aus einem rückstandfrei verbrennbaren Kunststoff bestehen und in eine Modelliermasse einbettbar sind. Die Führungsmatrize und die Schwalbenschwanzführung können jeweils nach genauer Einrichtung in die Modelliermasse für die Krone bzw. das Prothesengerüst eingebettet und eingearbeitet werden. Die Führungsmatrize und die Schwalbenschwanzführung bilden so einen Teil des Gußmodells. Nachdem das Gußmodell in eine Gußform eingesetzt und mit einer Einbettmasse umgossen ist, kann die Führungsmatrize und die Schwalbenschwanzführung zusammen mit der Modelliermasse ausgebrannt werden, so daß das Profil der Führungsmatrize und der Schwalbenschwanzführung durch den Guß genau nachgebildet wird.

Besonders günstige Friktionseigenschaften ergeben sich dadurch, daß die Friktionsplatte aus einem hochzähen und gleitfähigen Werkstoff besteht.

Eine Ausführungsform der Erfindung wird im Folgenden unter Bezugnahme auf die anliegende Zeichnung erläutert, in der darstellen:

Fig. 1 einen Schnitt durch ein Zahnprothesengeschiebe,
Fig. 2 einen Schnitt nach der Linie VI–VI in Fig. 1,
Fig. 3 eine Seitenansicht der Fig. 1 und Fig. 4 die Führungsmatrizen nach dem Einbau in die Prothese.

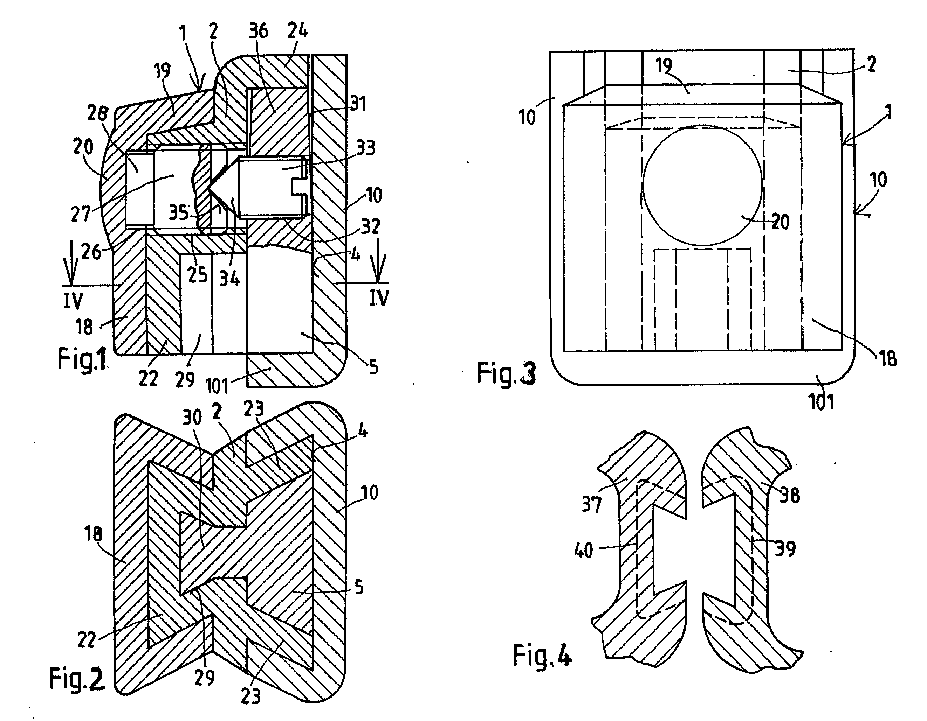

Die Figuren 1 bis 4 zeigen ein Zahnprothesengeschiebe mit einer Führungsmatrize 10, die als Schwalbenschwanzführung ausgebildet ist und eine Bodenwand 101 aufweist. Diese Führungsmatrize 10 besteht aus einem rückstandfrei verbrennbaren Kunststoff, der auch spritzfähig ist, so daß die Führungsmatrize mit hoher Genauigkeit als Spritzgießteil ausgebildet werden kann.

Die Patrize 1 umfaßt ein Patrizenhauptteil 2, eine Schwalbenschwanzführung 18 und die Friktionsplatte 5. Die Schwalbenschwanzführung 18 besitzt eine Querwand 19. Außerdem ist aus konstruktiven Gründen eine Aufwölbung 20 vorhanden, damit die Wandung im übrigen möglichst dünn sein kann. Die Schwalbenschwanzführung 18 besteht ebenfalls aus einem rückstandfrei verbrennbaren Kunststoff.

Das Patrizenhauptteil 2 hat eine Schwalbenschwanzleiste 22, die in die Nut der Schwalbenschwanzführung 18 paßt. An dem Patrizenhauptteil 2 sitzen gegenüberliegend zwei voneinander gespreizte Stege 23, die in die Schwalbenschwanznut der Führungsmatrize 10 passen. Diese Stege 23 definieren auch eine Paßfläche 4. Das Patrizenhauptteil 2 weist am Hinterende eine Abschlußwand 24 auf, die die Stege 23 überbrückt. Im Hinterende des Patrizenhauptteils 2 ist ein Gewindedurchgang 25 ausgebildet, der mit einem Sackloch 26 im Bereich der Aufwölbung 20 fluchtet. Eine Stiftschraube 27 ist in den Gewindedurchgang 25 einschraubbar und tritt mit ihrem abgesetzten Fuß 28 in das Sackloch 26 ein. Diese Stiftschraube 27 dient zur Lagesicherung des Patrizenhauptteils in der Schwalbenschwanzführung 18. Im Vorderende des Patrizenhauptteils ist eine weitere Schwalbenschwanznut 29 angeordnet.

Zwischen den Stegen 23 ist eine Ausnehmung innerhalb der Paßfläche 4 gebildet, in der die Friktionsplatte 5 Aufnahme findet. Die Friktionsplatte 5 hat am Vorderende einen Schwalbenschwanzansatz 30, der in die Schwalbenschwanznut 29 paßt. Das Hinterende der Friktionsplatte 5 weist eine konvexe Biegung 31 mit großem Krümmungsradius auf. Die Darstellung in Fig. 1 ist übertrieben. Innerhalb des Hinterendes der Friktionsplatte 5 ist ein Gewindedurchgang 32 angeordnet, in den ein Gewindestift 33 mit konischem Fuß 34 eingeschraubt werden kann. Der konische Fuß 34 greift in ein konisches Sackloch 35 im Kopf der Stiftschraube 27 ein. Mit diesem Gewindestift 33 läßt sich das Hinterende 36 der Friktionsplatte anstellen, so daß der Bereich der Biegung 31 entsprechend angehoben wird. Hierdurch erhält man beim Einschieben der Patrize 1 in die Führungsmatrize 10 eine einstellbare Friktionskraft.

Die Fig. 1 bis 3 zeigen das Zahnprothesengeschiebe im zusammengebauten Zustand. Die Führungsmatrize 10 und die Schwalbenschwanzführung 18 bestehen aus einem rückstandfrei verbrennbaren Kunststoff. Das Patrizenhauptteil 2 besteht aus einem verstärkten Thermoplast mit metallähnlicher Festigkeit. Dieser Thermoplast ist vorzugsweise ein faserverstärktes Polyamid. Das Patrizenhauptteil ist rückstellfähig, d.h. es nimmt nach einer Verformung seine ursprüngliche Form wieder an. Es ist zäh und reibfest. Infolgedessen ist es für das Zusammenwirken mit der Geschiebeführung aus Gußmetall geeignet. Denn es kann bei Verkantungen nachgeben und es ist abriebbeständig. Ein Festfressen ist ausgeschlossen. Die Friktionsplatte 5 schließlich besteht aus einem hochzähen, gleitfähigen Werkstoff, insbesondere einem spritzfähigen Thermoplast. Alle diese Teile lassen sich infolgedessen mit sehr hoher Genauigkeit und Formhaltigkeit als Thermoplastspritzgießteil wirtschaftlich günstig herausstellen.

Die Teile des Zahnprothesengeschiebes werden vom Zahntechniker bei der Herstellung der Zahnprothese in einfacher und genauer Weise in die Zahnprothese eingearbeitet. Dabei wird die Führungsmatrize 10 in die jeweilige Zahnkrone einmodelliert. Die Schwalbenschwanzführung 18 wird in das Prothesengerüst oder in ein anderes Prothesenteil einmodelliert. Die Führungsmatrize 10 bzw. die Schwalbenschwanzführung 18 bildet somit ein Teil des Gußmodells. Die Gußmodelle werden in eine Gußform eingesetzt und in eine Einbettmasse eingebettet. Vor dem Guß werden die Gußmodelle zusammen mit der jeweiligen Führungsmatrize bzw. der Schwalbenschwanzführung rückstandfrei ausgebrannt, so daß die jeweiligen Schwalbenschwanzführungen Hohlräume der Gußform bilden und von dem Gußmetall vollständig ausgefüllt werden. In Fig. 4 ist ein entsprechender Teil 37 des Prothesengerüsts und eine Wandung 38 einer Zahnkrone dargestellt. In diesen Gußteilen sind in gestrichelten Linien 39 und 40 die Umrisse der Führungsmatrize 10 bzw. der Schwalbenschwanzführung 18 eingezeichnet. Diese Umrisse sind vollständig von dem Gußmetall ausgefüllt, so daß innerhalb der jeweiligen Gußteile die Schwalbenschwanzführungen sehr genau ausgebildet sind.

In die Schwalbenschwanzführung des Prothesengerüsts 37 läßt sich jetzt das Patrizenhauptteil 2 einschieben und durch die Stiftschraube 27 fixieren. Sodann wird die Friktionsplatte 5 eingeschoben und durch den Gewindestift 33 fixiert und eingestellt. Nunmehr kann das Prothesengerüst 37 mit der Patrize 1 in die Schwalbenschwanznut der Wandung 38 eingeschoben werden. Durch Anstellen des Gewindestiftes 33 läßt sich die Friktionskraft und damit die Haltekraft nahezu beliebig einstellen.

Wenn die Friktionsplatte 5 einmal abgenutzt oder beschädigt sein sollte, kann dieselbe ohne weiteres ausgetauscht und durch eine neue Friktionsplatte ersetzt werden. Selbst das Patrizenhauptteil 2 kann nach Lösen der Stiftschraube 27 herausgenommen und ersetzt werden. Irgendwelche komplizierten Schweiß- oder Lötarbeiten an dem Prothesengerüst sind hierbei nicht erforderlich. Die Befestigungsschrauben und Stellschrauben sind ohne weiteres für den Zahntechniker oder den Zahnarzt zugänglich, so daß die erforderlichen Einstellarbeiten an der Friktion ohne Schwierigkeiten möglich sind.

Das Zahnprothesengeschiebe erleichtert die Handhabung der Prothese für den Benutzer. Denn das Patrizenhauptteil läßt sich mit einstellbarer Friktion in die Geschiebeführungen einschieben. Ein Verkanten führt nicht zu einem Festfressen, sondern ergibt lediglich eine Verformung, die sich selbsttätig zurückstellt. Es ist jederzeit ein Austausch der Friktionsplatte und/oder des Patrizenhauptteils durch Einschieben und Festschrauben möglich, ohne daß eine zusätzliche Bearbeitung oder Erwärmung der Prothese erforderlich ist.

## Patentansprüche

1. Zahnprothesengeschiebe mit einer Führungsmatrize (10) und einer in dieselbe einschiebbaren Patrize (1), dadurch gekennzeichnet, daß das Patrizenhauptteil (2) aus einem rückstellfähigen, zähen, abriebbeständigen Kunststoff besteht und austauschbar in einer in Einschubrichtung der Patrize ausgerichteten Schwalbenschwanzführung (18) der Patrize (1) aufgenommen ist und daß eine in einen Gewindedurchgang (25) des Patrizenhauptteils eingreifende Stiftschraube (27) in ein Loch (26) in der Wand der Schwalbenschwanzführung hineinreicht.

2. Zahnprothesengeschiebe nach Anspruch 1, dadurch gekennzeichnet, daß mindestens an einer Geschiebepaßfläche (4) des Patrizenhauptteils (2) eine Friktionsplatte (5) lösbar und einstellbar hinsichtlich der Reibungskraft gegenüber der Matrize angeordnet ist.

3. Zahnprothesengeschiebe nach Anspruch 1 oder 2, dadurch gekennzeichnet, daß die Führungsmatrize (10) eine Schwalbenschwanzführung und eine Bodenwand (101) aufweist.

4. Zahnprothesengeschiebe nach einem der Ansprüche 1 bis 3, dadurch gekennzeichnet, daß in eine Schwalbenschwanznut (29) des Patrizenhauptteils (2) ein Schwalbenschwanzansatz (30) am Vorderende der Friktionsplatte (5) einschiebbar ist.

5. Zahnprothesengeschiebe nach Anspruch 4, dadurch gekennzeichnet, daß die Friktionsplatte (5) in einer Ausnehmung der Paßfläche des Patrizenhauptteils (2) liegt.

6. Zahnprothesengeschiebe nach Anspruch 4 oder 5, dadurch gekennzeichnet, daß ein durch einen Gewindedurchgang (32) in der Friktionsplatte (5) reichender Gewindestift (33) in ein konisches Sackloch (35) im Kopf der Stiftschraube (27) eingreift.

7. Zahnprothesengeschiebe nach einem der Ansprüche 4 bis 6, dadurch gekennzeichnet, daß die Friktionsplatte (5) im Bereich des Hinterendes (36) eine konvexe Biegung (31) aufweist.

8. Zahnprothesengeschiebe nach einem der Ansprüche 4 bis 7, dadurch gekennzeichnet, daß die Gußmodelle der Führungsmatrize (10) und der Patrize (1) aus einem rückstandfrei verbrennbaren Kunststoff bestehen und in eine Modelliermasse einbettbar sind.

9. Zahnprothesengeschiebe nach einem der Ansprüche 4 bis 8, dadurch gekennzeichnet, daß die Friktionsplatte aus einem hochzähen und gleitfähigen Werkstoff besteht.

## Claims

1. Sliding element for dental prostheses having a female guide mould (10) and a male mould (1) insertable into it, characterized in that the male mould main part (2) is produced from a resilient, tough, abrasion-resistant synthetic material, and is removably placed in a dovetail guide (18) on the male mould (1), the dovetail guide being aligned with the direction in which the male mould is inserted, and by having a locking screw (27), which engages in a threaded hole (25) through the male mould main part, fit into a hole (26) in the wall of the dovetail guide.

2. Sliding element for dental prostheses according to claim 1, characterized in that a friction plate (5) is installed on at least one sliding element fitting surface (4) of the male mould main part (2) opposite the female mould, the friction plate (5) being detachable and adjustable in respect of the frictional force.

3. Sliding element for dental prostheses according to claim 1 or 2, characterized in that the female guide mould (10) has a dovetail guide and a base wall (101).

4. Sliding element for dental prostheses according to one of the claims 1 to 3, characterized in that a dovetail projection (30) on the front end of the friction plate (5) can be slotted into a dovetail groove (29) on the male mould main part (2).

5. Sliding element for dental prostheses according to claim 4, characterized in that the friction plate (5) is positioned in a recess in the fitting surface of the male mould main part (2).

6. Sliding element for dental prostheses according to claim 4 or 5, characterized in that a setscrew (33), which engages in the friction plate (5) through a threaded hole (32), fits into a conical blind hole (35) in the head of the locking screw (27).

7. Sliding element for dental prostheses according to one of the claims 4 to 6, characterized in that the friction plate (5) has a convex curve (31) in the back end (36) area.

8. Sliding element for dental prostheses according to one of the claims 4 to 7, characterized in that the casting patterns of the female guide mould (10) and of the male mould (1) are made from a synthetic material which can be burnt without residue, and they can be embedded in a modelling medium.

9. Sliding element for dental prostheses according to one of the claims 4 to 8, characterized in that the friction plate is of a very tough material capable of sliding.

## Revendication

1. Attelage coulissant pour prothèse dentaire comprenant une matrice de guidage (10) et un élément mâle qui peut être enfoncé dans celle-ci, caractérisé en ce que la pièce principale (2) de l'élément mâle est constituée en une matière synthétique à mémoire élastique, tenace et résistant à l'usure et est logée de manière échangeable dans un guidage à section en queue-d'aronde (18) de l'élément mâle (1) qui est orienté suivant la direction d'enfoncement de l'élément mâle et en ce qu'un goujon fileté (27) pénétrant dans un passage taraudé (25) de la pièce principale de l'élément mâle parvient dans un trou (26) de la paroi du guidage en queue-d'aronde.

2. Attelage coulissant pour prothèse dentaire suivant la revendication 1, caractérisé en ce qu'une plaque de friction (5) est agencée de manière détachable et réglable du point de vue de la force de friction vis-à-vis de la matrice au moins sur une surface d'ajustage (4) de la pièce principale (2) de l'élément mâle.

3. Attelage coulissant pour prothèse dentaire suivant l'une des revendications 1 et 2, caractérisé en ce que la matrice de guidage (10) présente un guidage à section en queue-d'aronde et une paroi de fond (101).

4. Attelage coulissant pour prothèse dentaire suivant l'une des revendications 1 à 3, caractérisé en ce qu'un tenon à section en queue-d'aronde (30) prévu à l'extrémité avant de la plaque de friction (5) peut être enfoncé dans une rainure à section en queue-d'aronde (29) de la pièce principale (2) de l'élément mâle.

5. Attelage coulissant pour prothèse dentaire suivant la revendication 4, caractérisé en ce que la plaque de friction (5) se trouve dans un évidement de la surface d'ajustage de la pièce principale (2) de l'élément mâle.

6. Attelage coulissant pour prothèse dentaire suivant l'une des revendications 4 et 5, caractérisé en ce qu'une vis sans tête (33) passant dans la plaque de friction (5) à travers un passage taraudé (32) pénètre dans un trou borgne conique (35) prévu dans la tête du goujon fileté (27).

7. Attelage coulissant pour prothèse dentaire suivant l'une des revendications 4 à 6, caractérisé en ce que la plaque de friction (5) présente une courbure convexe (31) dans la zone de l'extrémité arrière (36).

8. Attelage coulissant pour prothèse dentaire suivant l'une des revendications 4 à 7, caractérisé en ce que les modèles de coulée de la matrice de guidage (10) et de l'élément mâle (1) sont constitués en une matière synthétique combustible sans résidu et peuvent être noyés dans une masse à modeler.

9. Attelage coulissant pour prothèse dentaire suivant l'une des revendications 4 à 8, caractérisé en ce que la plaque de friction est constituée d'un matériau fortement tenace et permettant un coulissement.

Fig.1

Fig.2

Fig.3

Fig.4

EP 0 254 027 B1